# NEUE EUROPÄISCHE PATENTSCHRIFT

(11) **EP 2 729 269 B2**
(45) Veröffentlichungstag und Bekanntmachung des Hinweises auf die Entscheidung über den Einspruch: **14.10.2020**
(45) Hinweis auf die Patenterteilung: 14.12.2016
(21) Anmeldenummer: 12742773.0
(22) Anmeldetag: 03.07.2012
(51) Int. Cl.: B23B 27/14, B23B 51/04

(54) **BOHRER-SCHNEIDEINSATZ**
DRILL CUTTING INSERT
INSERT DE COUPE POUR FORAGE

(30) Priorität: 05.07.2011 AT 3822011 U
(43) Veröffentlichungstag der Anmeldung: 14.05.2014
(73) Patentinhaber: Ceratizit Austria Gesellschaft m.b.H., 6600 Reutte (AT)
(72) Erfinder: PRAST, Josef, A-6600 Reutte (AT); VENTURINI, Remus, 87672 Rosshaupten (DE); SCHLEINKOFER, Uwe, A-6600 Reutte (AT)
(74) Vertreter: Ciesla, Dirk
(86) Internationale Anmeldenummer: PCT/AT2012/000179
(87) Internationale Veröffentlichungsnummer: WO 2013/003874

(56) Entgegenhaltungen:
- EP-A1- 0 480 576
- EP-A1- 2 239 073
- EP-A1- 2 277 645
- WO-A1-03/099494
- WO-A1-2008/153233
- DE-U1- 9 407 575
- JP-A- 10 180 521
- JP-A- H09 272 006
- JP-A- H09 290 310
- JP-A- H10 180 519
- JP-A- H10 217 019
- JP-A- S58 191 913
- JP-A- S59 196 107
- JP-A- 2000 190 107
- JP-A- 2001 090 107
- JP-A- 2001 252 809
- JP-A- 2001 269 808
- JP-A- 2002 066 811
- JP-A- 2003 170 308
- JP-A- 2003 225 817
- JP-B2- 4 627 849
- US-A- 4 659 264
- US-A- 5 688 083
- US-A- 5 921 723
- US-A- 5 971 676
- US-A1- 2005 111 928
- US-A1- 2009 245 949
- US-A1- 2010 166 514
- US-A1- 2010 178 122
- US-A1- 2010 272 526
- US-B2- 6 527 486
- Sandvik's Modern Metal Cutting. 1996, Seiten XI-2,3
- König, Fertigungsverfahren Band 1, VDI Verlag, vierte Auflage, 1990

## Beschreibung

Die vorliegende Erfindung betrifft einen Schneideinsatz gemäß dem Oberbegriff des Anspruchs 1, und ein Bohrwerkzeug gemäß dem Oberbegriff des Anspruchs 13 mit zumindest zwei identischen Bohrer-Schneideinsätzen.

Ein solcher Schneideinsatz ist aus der JP 2002-66811 A bekannt, und ein solcher Bohrwerkzeug ist aus der WO 2008/153233 A1 bekannt.

Es ist bekannt, zum Bohren in insbesondere metallisches Vollmaterial Bohrwerkzeuge zu verwenden, die einen um eine Längsachse drehbaren Grundkörper aufweisen, der mit einer Mehrzahl von auswechselbaren Schneideinsätzen versehen ist, die z.B. durch Wendeschneidplatten gebildet sein können.

WO 03/099494 A1 beschreibt z.B. ein Bohrwerkzeug, das einen Grundkörper und zwei Schneideinsätze aufweist, wobei ein Schneideinsatz einen Zentrumseinsatz bildet und der andere Schneideinsatz einen Randeinsatz. Zum Einsatz gelangende, aktive Schneidkanten des Zentrumseinsatzes und des Randeinsatzes stehen jeweils in axialer Richtung über den Grundkörper hervor und bewirken beim Betrieb des Bohrwerkzeugs einen spanenden Abtrag des zu bohrenden Materials.

Wenn mit einem Bohrwerkzeug der eingangs beschriebenen Art tiefe Löcher gebohrt werden sollen, insbesondere Löcher mit einer Tiefe T, die einer Vielzahl des zu bohrenden Durchmessers D entspricht (z.B. T > 4 D), muss das Bohrwerkzeug hohen Anforderungen genügen, um ein exaktes Bohren mit einem genau definierten Durchmesser des Bohrlochs zu ermöglichen. Besonders bei tiefen zu bohrenden Löchern kann eine beim Bohren auftretende elastische Deformation des Bohrwerkzeugs große Auswirkungen auf die erzielte Maßhaltigkeit haben. Um die Kosten möglichst gering zu halten, ist es ferner erwünscht, eine möglichst lange Standzeit der verwendeten Schneideinsätze zu erzielen. Sowohl in Bezug auf die Bearbeitungsgenauigkeit als auch in Bezug auf die Abnutzung der verwendeten Schneideinsätze kommt dem Anbohrverhalten, d.h. dem Verhalten des Bohrwerkzeugs bei dem anfänglichen Eindringen der aktiven Schneidkanten der Schneideinsätze in das zu bohrende Material, besondere Bedeutung zu, da zu diesem Zeitpunkt noch keine seitliche Führung der Spitze des Bohrwerkzeugs gegeben ist.

Im Hinblick auf einen möglichst kostengünstigen Betrieb von derartigen Bohrwerkzeugen ist es vorteilhaft, wenn die verwendeten Schneideinsätze als Wendeschneidplatten mit möglichst vielen, separat zu verwendenden Teilschneidkanten ausgebildet sind, so dass bei einer Abnutzung einer Teilschneidkante eine nächste, noch nicht abgenutzte Teilschneidkante zum Einsatz kommen kann. Andererseits ist es im Hinblick auf einen kostengünstigen Betrieb vorteilhaft, wenn die Schneideinsätze in möglichst hohen Stückzahlen gefertigt werden können.

Da bei mit Schneideinsätzen bestückten Bohrwerkzeugen in regelmäßigen Abständen ein Austausch der Schneideinsätze erfolgen muss, ist es ferner erstrebenswert, eine möglichst einfache Handhabung bei dem Austausch der Schneideinsätze bereitzustellen.

JP 2002-66811 A zeigt einen Schneideinsatz zum Fräsen mit einer in Aufsicht im Wesentlichen quadratischen Grundform. Jede Schneidkante weist ausgehend von einem Eckenabschnitt einen ersten Schneidkantenabschnitt und einen daran anschließenden zweiten Schneidkantenabschnitt auf. Der erste Schneidkantenabschnitt ist derart gegenüber dem zweiten Schneidkantenabschnitt verkippt ausgebildet, dass er sich einer Zentrumsachse des Schneideinsatzes annähert.

EP 2 277 645 A1 beschreibt eine Wendeschneidplatte mit einer ersten und einer zweiten Plattenfläche mit jeweils gleichseitiger Dreiecksgrundform, die durch Seitenflächen miteinander verbunden sind. In den Eckbereichen der Wendeschneidplatte weist jeweils eine erste Seitenfläche eine mit einer angrenzenden zweiten Seitenfläche einen Winkel von kleiner als 60° einschließende Partie auf.

WO 2008/153233 A1 beschreibt einen Bohrer mit einem inneren und einem äußeren Schneideinsatz. Der Bohrer weist einen Bohrerkörper mit einer Rotationsachse, einem an die Rotationsachse angrenzend an einer Stirnseite des Bohrerkörpers angeordneten inneren Schneideinsatz und einem zu dem inneren Einsatz identischen äußeren Schneideinsatz, der weiter von der Rotationsachse entfernt angeordnet ist, auf. Die Schneideinsätze weisen jeweils eine achssymmetrische Kontour mit vier Schneidkanten und vier gerundeten Ecken auf.

Es ist Aufgabe der vorliegenden Erfindung einen Bohrer-Schneideinsatz und ein Bohrwerkzeug mit zumindest zwei Schneideinsätzen bereitzustellen, die ein möglichst hohes Maß an Bearbeitungsgenauigkeit auch bei tiefen, zu bohrenden Löchern erzielen und dabei gleichzeitig einen möglichst kostengünstigen Betrieb und eine einfache Handhabung ermöglichen.

Die Aufgabe wird durch einen Bohrer-Schneideinsatz nach Anspruch 1 gelöst. Vorteilhafte Weiterbildungen sind in den abhängigen Ansprüchen angegeben. Unter "außenseitig" einen Winkel α < 180° miteinander einschließen wird in dem vorliegenden Zusammenhang verstanden, dass der außerhalb des Bohrer-Schneideinsatzes zwischen der Hauptschneide und der Nebenschneide gebildete Winkel gemessen wird und nicht der innerhalb des Bohrer-Schneideinsatzes gebildete Winkel zwischen der Hauptschneide und der Nebenschneide. Insbesondere kann der Bohrer-Schneideinsatz eine Symmetrieachse aufweisen, um die n-zählige Rotationssymmetrie gegeben ist. Der Winkel α ist in einer Ebene senkrecht zu der Symmetrieachse zu messen, in der die Hauptschneide und die Nebenschneide verlaufen bzw. auf die die Hauptschneide und die Nebenschneide projiziert werden. Die jeweilige Teilschneidkante wird durch drei Abschnitte gebildet, die sich in dieser Reihenfolge zwischen zwei benachbarten Schneidecken erstrecken: die Hauptschneide, der Übergangsabschnitt und die Nebenschneide. Die Schneidecken können insbesondere durch einen Bereich mit einem vorgegebenen Radius gebildet sein, der eine Hauptschneide und eine Nebenschneide einer benachbarten Teilschneidkante miteinander verbindet. Die Oberseite des Bohrer-Schneideinsatzes kann zumindest in einem Teilbereich als eine Spanleitfläche zum Ableiten von beim Bohren erzeugten Spänen ausgebildet sein. Der Winkel α kann insbesondere in einem Bereich zwischen 179° und 173° liegen, bevorzugt in einem Bereich zwischen 178° und 175°, mehr bevorzugt bei 177°.

Durch die Anordnung der Hauptschneiden und der Nebenschneiden in der angegebenen Weise, können zwei identische der erfindungsgemäßen Bohrer-Schneideinsätze derart in einem Bohrwerkzeug angeordnet werden, dass sowohl eine hervorragende Bearbeitungsgenauigkeit, insbesondere durch ein hervorragendes Anbohrverhalten, erzielt wird, als auch die unbenutzten weiteren Teilschneidkanten zuverlässig gegen Verschleiß geschützt werden. Ferner ermöglicht die angegebene Anordnung die Verwendung identischer Bohrer-Schneideinsätze für eine große Bandbreite zu bohrender Durchmesser, da die relative radiale Positionierung von zwei gleichen Bohrer-Schneideinsätzen zueinander über einen weiten Bereich variiert werden kann. Insbesondere kann zum Bereitstellen unterschiedlicher Bohrdurchmesser die radiale Position eines äußeren Bohrer-Schneideinsatzes an einem Bohrwerkzeug verändert werden. Die Verwendbarkeit von identischen Bohrer-Schneideinsätzen für eine große Bandbreite zu bohrender Durchmesser führt ebenso wie Verwendbarkeit von zwei identischen Bohrer-Schneideinsätzen als innerer Schneideinsatz und äußerer Schneideinsatz in einem Bohrwerkzeug dazu, dass der Bohrer-Schneideinsatz in hohen Stückzahlen hergestellt werden kann. Die Verwendbarkeit identischer Bohrer-Schneideinsätze als innerer Schneideinsatz und äußerer Schneideinsatz ermöglicht ferner eine besonders einfache Handhabung des Bohrwerkzeugs.

Gemäß einer Ausgestaltung schließen die Hauptschneide einer Teilschneidkante und die Nebenschneide einer benachbarten Teilschneidkante einen spitzen Winkel miteinander ein, so dass eine spitzwinklige Schneidecke gebildet ist. Unter einer spitzwinkligen Schneidecke wird dabei eine Schneidecke mit einem Eckenwinkel < 90° verstanden. Für den Fall, dass n = 4 kann der Eckenwinkel z.B. zwischen 89° und 83° betragen bevorzugt zwischen 88° und 85°, besonders bevorzugt 87°. Für den Fall, dass n = 3 kann der Eckenwinkel z.B. zwischen 59° und 53° betragen, bevorzugt zwischen 58° und 55°, besonders bevorzugt 57°. Die spitzwinklige Anordnung der Schneidecke ermöglicht, insbesondere im Fall von n = 4, dass durch eine geeignete Ausrichtung von zwei identischen Bohrer-Schneideinsätzen in einem Bohrwerkzeug sowohl ein besonders vorteilhaftes Anbohrverhalten erzielt wird, als auch insbesondere beim Bohren von tiefen Löchern eine Beschädigung des bereits gebohrten Bereichs des Bohrlochs verhindert wird.

Gemäß einer Ausgestaltung verlaufen die n Hauptschneiden entlang der Kontur eines imaginären ersten n-Ecks und die n Nebenschneiden verlaufen entlang der Kontur eines imaginären zweiten n-Ecks, das eine kleinere Kantenlänge als das imaginäre erste n-Eck aufweist. In anderen Worten bedeutet dies, dass die n Hauptschneiden entlang Tangenten an einen ersten Kreis verlaufen und die n Nebenschneiden entlang Tangenten an einen zweiten Kreis verlaufen, der konzentrisch zu dem ersten Kreis ist, und der Radius des ersten Kreises größer als der Radius des zweiten Kreises ist. Der Radius des ersten Kreises ist kann dabei zwischen 2% und 20% größer sein, als der Radius des zweiten Kreises, z.B. um 5%. Das imaginäre erste n-Eck und das imaginäre zweite n-Eck können z.B. relativ zu ihrem Zentrum um einen Winkel zwischen 1° und 7° gegeneinander verkippt ausgerichtet sein, bevorzugt zwischen 2° und 5°, mehr bevorzugt um 3°.

Wenn der Bohrer-Schneideinsatz eine Symmetrieachse aufweist, um die n-zählige Rotationssymmetrie gegeben ist, und eine Bohrung vorgesehen ist, die die Oberseite und die Unterseite miteinander verbindet und die konzentrisch zu der Symmetrieachse verläuft, dann ist eine indizierende Ausrichtung und Befestigung des Bohrer-Schneideinsatzes an einem Bohrwerkzeug in besonders einfacher Weise ermöglicht.

Gemäß einer Ausgestaltung weist der Bohrer-Schneideinsatz eine Symmetrieachse auf, um die n-zählige Rotationssymmetrie gegeben ist, und die Schneidkante verläuft in einer Ebene, die sich senkrecht zu der Symmetrieachse erstreckt. Bevorzugt verläuft die Schneidkante vollständig in einer solchen Ebene, d.h. die Hauptschneiden, Übergangsabschnitte und Nebenschneiden der Teilschneidkanten sowie die Schneidkante im Bereich der Schneidecken verlaufen in derselben Ebene. In diesem Fall wird ein besonders vorteilhaftes Bohrverhalten bereitgestellt.

Gemäß einer Ausgestaltung ist die umlaufende Seitenfläche derart ausgestaltet, dass entlang der gesamten Schneidkante ein positiver Freiwinkel gebildet ist.

Gemäß einer Ausgestaltung beträgt die Länge der Hauptschneide zwischen 20 % und 80 % der Länge der Nebenschneide. In diesem Fall werden besonders ausgewogene Bohreigenschaften erzielt.

Bevorzugt ist n = 4, d.h. die Schneidkante weist vier identische Teilschneidkanten und vier Schneidecken auf. In diesem Fall wird eine hohe Anzahl von separat verfügbaren Teilschneidkanten bereitgestellt.

Die Oberseite ist gemäß Anspruch 1 mit einer spanleitenden Struktur versehen, deren Breite entlang einer Teilschneidkante von der Nebenschneide zu der Hauptschneide zunimmt. Die Breite der spanleitenden Struktur ist in dem Bereich der Hauptschneide somit größer, als in dem Bereich der Nebenschneide. Durch diese Ausgestaltung wird eine besonders bevorzugte Spanausbildung beim Bohren erzielt. Die Breite der spanleitenden Struktur wird dabei senkrecht zu der Schneidkante in einer Ebene gemessen, die sich senkrecht zu der Symmetrieachse des Bohrer-Schneideinsatzes erstreckt. Es ist zu beachten, dass eine kontinuierliche Zunahme der Breite der spanleitenden Struktur zwar bevorzugt, aber nicht zwingend ist. Bevorzugt ist auch die Tiefe der spanleitenden Struktur in dem Bereich der Hauptschneide größer, als in dem Bereich der Nebenschneide. Die Tiefe wird dabei in einer Richtung parallel zu der Symmetrieachse von einer die jeweilige Schneidkante in diesem Bereich enthaltenden Ebene, die sich senkrecht zu der Symmetrieachse erstreckt, aus gemessen.

Die Aufgabe wird auch durch ein Bohrwerkzeug nach Anspruch 11 gelöst. Vorteilhafte Weiterbildungen sind in den abhängigen Ansprüchen angegeben. Mit dem Bohrwerkzeug werden die bereits zuvor in Bezug auf den Bohrer-Schneideinsatz beschriebenen Vorteile erzielt. Insbesondere wird ein hohes Maß an Bearbeitungsgenauigkeit auch bei tiefen, zu bohrenden Löchern erzielt und dabei werden gleichzeitig ein kostengünstiger Betrieb und eine einfache Handhabung ermöglicht.

Gemäß einer Ausgestaltung steht der innere Schneideinsatz mit einer aktiven Teilschneidkante in axialer Richtung über den Grundkörper hervor und der äußere Schneideinsatz steht mit einer aktiven Teilschneidkante in axialer Richtung über den Grundkörper hervor. Dabei ist bei der aktiven Teilschneidkante des inneren Schneideinsatzes die Nebenschneide näher zu der Längsachse angeordnet, als die in axialer Richtung vorgelagerte Hauptschneide, und bei der aktiven Teilschneidkante des äußeren Schneideinsatzes ist die Nebenschneide näher zu der Längsachse angeordnet, als die Hauptschneide. Durch diese Anordnung wird insbesondere beim anfänglichen Eindringen des Bohrwerkzeugs in das zu bohrende Material ein besonders stabiles Verhalten erzielt. Ferner wird in dieser Weise sichergestellt, dass identische Bohrer-Schneideinsätze als innerer Schneideinsatz und äußerer Schneideinsatz zum Einsatz kommen können.

Gemäß einer Ausgestaltung ist die Hauptschneide der aktiven Teilschneidkante des inneren Schneideinsatzes derart ausgerichtet, dass ihr in radialer Richtung weiter von der Längsachse entfernter Bereich in axialer Richtung weiter hervorsteht, als ihr in radialer Richtung näher an der Längsachse angeordneter Bereich, und die Hauptschneide der aktiven Teilschneidkante des äußeren Schneideinsatzes ist derart ausgerichtet ist, dass ihr in radialer Richtung näher an der Längsachse angeordneter Bereich in axialer Richtung weiter hervorsteht, als ihr in radialer Richtung weiter von der Längsachse entfernter Bereich. In diesem Fall wird ein besonders bevorzugtes Anbohrverhalten beim anfänglichen Eindringen des Bohrwerkzeugs in das zu bohrende Material erzielt. Durch die schräge Anstellung des inneren Schneideinsatzes wird beim Bohren eine leichte in radialer Richtung nach außen drängende Kraft ausgeübt, wohingegen durch die gegenläufige Anstellung des äußeren Schneideinsatzes eine leichte in radialer Richtung nach innen drängende Kraft ausgeübt wird, so dass insgesamt die Rotationsbewegung des Bohrwerkzeugs stabilisiert wird. Durch die beschriebene Ausrichtung der Hauptschneiden wird ferner beim Bohren in dem zu bohrenden Material eine Führungsfläche ausgebildet, die zusätzlich zur Stabilisierung des Bohrverhaltens beiträgt. Somit werden ein besonders vorteilhaftes Anbohrverhalten und ein hohes Maß an Bearbeitungsgenauigkeit auch bei tiefen, zu bohrenden Löchern erzielt.

Die Aufgabe wird auch durch ein Bohrwerkzeug nach Anspruch 13 gelöst.

Vorteilhafte Weiterbildungen sind in den abhängigen Ansprüchen angegeben.

Das Bohrwerkzeug weist auf: einen Grundkörper, der um eine Längsachse drehbar ist, und zumindest einen auswechselbaren inneren Schneideinsatz und einen in radialer Richtung weiter außen angeordneten auswechselbaren äußeren Schneideinsatz. Der innere Schneideinsatz und der äußere Schneideinsatz sind identisch ausgebildet und weisen jeweils zumindest eine in axialer Richtung über den Grundkörper hervorstehende, identisch ausgebildete Teilschneidkante, die sich zwischen zwei Schneidecken erstreckt, auf. Die Teilschneidkante weist auf: angrenzend an eine erste Schneidecke eine gerade Hauptschneide, angrenzend an die andere Schneidecke eine gerade Nebenschneide, und einen Übergangsabschnitt, über den die Hauptschneide und die Nebenschneide ineinander übergehen und der angrenzend an die Hauptschneide einen konvexen Abschnitt und angrenzend an die Nebenschneide einen konkaven Abschnitt aufweist. Sowohl bei dem inneren Schneideinsatz als auch bei dem äußeren Schneideinsatz ist die Hauptschneide in radialer Richtung weiter von der Längsachse entfernt angeordnet als die Nebenschneide. Der innere Schneideinsatz ist derart angeordnet, dass die Hauptschneide der Nebenschneide axial vorgelagert und derart ausgerichtet ist, dass ihr in radialer Richtung weiter von der Längsachse entfernter Bereich in axialer Richtung weiter hervorsteht, als ihr in radialer Richtung näher an der Längsachse angeordneter Bereich. Der äußere Schneideinsatz ist derart angeordnet, dass die Hauptschneide derart ausgerichtet ist, dass ihr in radialer Richtung näher an der Längsachse angeordneter Bereich in axialer Richtung weiter hervorsteht, als ihr in radialer Richtung weiter von der Längsachse entfernter Bereich.

Mit dem Bohrwerkzeug werden wiederum die bereits zuvor beschriebenen Vorteile erzielt. Durch die angegebene Anordnung wird einerseits ein besonders vorteilhaftes Anbohrverhalten erzielt und andererseits erfolgt eine Stabilisierung des Bohrwerkzeugs bei dem Bohrprozess, da stirnseitig in dem zu bohrenden Material eine Führungsfläche ausgebildet wird. Ferner ermöglicht diese Anordnung die Verwendung von zwei identischen Bohrer-Schneideinsätzen mit einer Mehrzahl von separat verwendbaren, identischen Teilschneidkanten als innerer und äußerer Schneideinsatz.

Gemäß einer Ausgestaltung ist die Nebenschneide der aktiven Teilschneidkante des äußeren Schneideinsatzes derart angeordnet, dass ihr in radialer Richtung näher an der Längsachse angeordneter Bereich in axialer Richtung weiter hervorsteht, als ihr in radialer Richtung weiter von der Längsachse entfernter Bereich. In diesem Fall bewirkt die beschriebene Ausrichtung der Nebenschneide eine zusätzliche Stabilisierung des Bohrprozesses.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine Aufsicht auf einen Bohrer-Schneideinsatz gemäß einer ersten Ausführungsform;
- Fig. 2:: einen Schnitt entlang der Linie A-A von Fig. 1;
- Fig. 3:: eine Seitenansicht des Bohrer-Schneideinsatzes von Fig. 1;
- Fig. 4:: eine Fig. 1 entsprechende schematische Darstellung zur Erläuterung des Verlaufs der Haupt- und Nebenschneiden;
- Fig. 5:: eine Fig. 4 entsprechende schematische Darstellung eines Bohrer-Schneideinsatzes gemäß einer zweiten Ausführungsform;
- Fig. 6a:: eine Darstellung eines Bohrwerkzeugs mit zwei identischen Bohrer-Schneideinsätzen gemäß der ersten Ausführungsform;
- Fig. 6b:: eine vergrößerte Darstellung des Ausschnitts Z aus Fig. 6a;
- Fig. 7:: eine Darstellung des Bohrwerkzeugs mit zwei identischen Bohrer-Schneideinsätzen gemäß der ersten Ausführungsform in einer Richtung entlang einer Längsachse des Bohrwerkzeugs;
- Fig. 8:: eine schematische Darstellung zur Erläuterung der Ausrichtung von aktiven Teilschneidkanten für einen ersten zu bohrenden Durchmesser;
- Fig. 9:: eine schematische Darstellung zur Erläuterung der Ausrichtung von aktiven Teilschneidkanten für einen zweiten zu bohrenden Durchmesser;
- Fig. 10a: eine Fig. 1 entsprechende Aufsicht auf den Bohrer-Schneideinsatz gemäß der ersten Ausführungsform; und
- Fig. 10b: einen Teil einer Schnittdarstellung entlang Linie B-B in Fig. 10a.

### ERSTE AUSFÜHRUNGSFORM

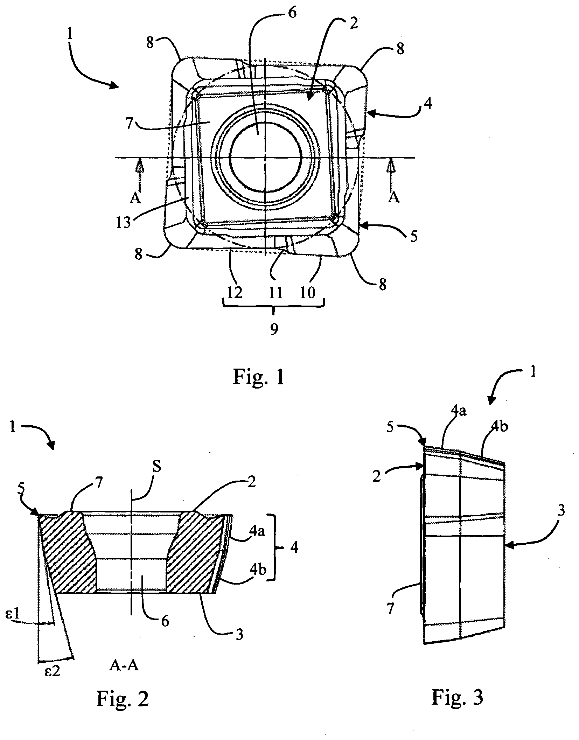

Im Folgenden wird eine erste Ausführungsform mit Bezug auf die Fig. 1 bis Fig. 4 und Fig. 6 bis Fig. 9 beschrieben. Fig. 1 zeigt eine Aufsicht auf einen Bohrer-Schneideinsatz -1- gemäß der ersten Ausführungsform. Der Bohrer-Schneideinsatz -1- (im Folgenden auch lediglich als Schneideinsatz -1-bezeichnet) weist eine Oberseite -2-, eine Unterseite -3- und eine umlaufende Seitenfläche -4-, die die Oberseite -2- und die Unterseite -3- miteinander verbindet, auf. An dem Übergang zwischen der Seitenfläche -4- und der Oberseite -2- ist eine Schneidkante -5- gebildet, die bei der dargestellten Ausführungsform entlang des gesamten Randes der Oberseite -2- umlaufend ausgebildet ist. Der Bohrer-Schneideinsatz -1- weist bei der dargestellten Ausführungsform eine Symmetrieachse -S- auf, die in Fig. 1 senkrecht zur Darstellungsebene verläuft. Der Bohrer-Schneideinsatz -1- weist bezüglich seiner Form eine n-zählige Rotationssymmetrie um die Symmetrieachse -S-auf, d.h. der Bohrer-Schneideinsatz -1- weist bei Rotation um 360°/n um die Symmetrieachse -S- dieselbe Form auf. Bei der ersten Ausführungsform ist n = 4, d.h. der Bohrer-Schneideinsatz -1- weist vierzählige Rotationssymmetrie auf und kann durch Rotation um 90° um die Symmetrieachse -S- in dieselbe Form übergeführt werden. Es ist eine Bohrung -6- vorgesehen, die konzentrisch zu der Symmetrieachse -S- verläuft und den Bohrer-Schneideinsatz -1- von der Oberseite -2- zu der Unterseite -3- durchdringt. Die Bohrung -6- ist von einer umlaufenden Fläche -7- umgeben, die sich in einer Ebene senkrecht zu der Symmetrieachse -S- erstreckt.

Bei der ersten Ausführungsform weist der Bohrer-Schneideinsatz -1- in Aufsicht auf die Oberfläche -2- eine im Wesentlichen quadratische Grundform auf, die in einigen Bereichen abgewandelt ist, wie im Folgenden noch eingehender beschrieben wird. Der Bohrer-Schneideinsatz -1- weist n Schneidecken -8- auf, d.h. vier Schneidecken bei der ersten Ausführungsform mit n = 4. Zwischen jeweils zwei benachbarten Schneidecken -8- erstrecken sich Teilschneidkanten -9-, die - ebenso wie die Schneidecken -8- - Abschnitte der Schneidkante -5- bilden. Die Teilschneidkanten -9- sind jeweils identisch ausgebildet und weisen eine Hauptschneide -10-, einen Übergangsabschnitt-11- und eine Nebenschneide -12- auf. Die Hauptschneide -10- schließt sich an die eine, die jeweilige Teilschneidkante -9-begrenzende Schneidecke -8- an und die Nebenschneide -12- schließt sich an die andere, die jeweilige Teilschneidkante -9- begrenzende Schneidecke -8- an. Die Hauptschneide -10- und die Nebenschneide -12- gehen über den Übergangsabschnitt -11- ineinander über, d.h. der Übergangsabschnitt -11- ist ein separater Abschnitt der Teilschneidkante -9- der die Hauptschneide -10- und die Nebenschneide -12- miteinander verbindet. In Aufsicht auf die Oberseite -2-, die sich im Wesentlichen senkrecht zu der Symmetrieachse -S-erstreckt, verläuft die Hauptschneide -10- gerade. Auch die Nebenschneide -12-verläuft in Aufsicht auf die Oberseite -2- gerade. Der Übergangsabschnitt -11-weist angrenzend an die Hauptschneide -10- einen konvexen Abschnitt und angrenzend an die Nebenschneide -12- einen konkaven Abschnitt auf. Die Nebenschneide -12- weist dabei eine größere Länge auf, als die Hauptschneide -10-, wobei das Verhältnis der Länge der Hauptschneide -10-zu der Länge der Nebenschneide -12- zwischen 0,2 und 0,8 liegen kann, bevorzugt zwischen 0,4 und 0,52.

Wie insbesondere in Fig. 3 zu sehen ist, verläuft die Schneidkante -5- über ihren gesamten Verlauf in einer Ebene, die sich senkrecht zu der Symmetrieachse -S- erstreckt, d.h. die Schneidkante -5- verläuft im Bereich der Schneidecken -8-, im Bereich der Hauptschneiden -10-, im Bereich der Übergangsabschnitte -11- und im Bereich der Nebenschneiden -12- in derselben Ebene senkrecht zu der Symmetrieachse -S-.

Die Hauptschneiden -10- von jeweils zwei benachbarten Teilschneidkanten -9-verlaufen in einem Winkel von 90° zueinander (bei n = 4), so dass die Hauptschneiden -10- entlang der Kontur eines imaginären ersten n-Ecks -E1-(eines Quadrats bei n = 4) verlaufen. Mit anderen Worten bilden die Hauptschneiden -10- in ihrer Verlängerung Tangenten an einen ersten Kreis -K1- um die Symmetrieachse -S- des Bohrer-Schneideinsatzes -1-.

Die Nebenschneiden -12- von jeweils zwei benachbarten Teilschneidkanten -9-verlaufen ebenfalls in einem Winkel von 90° zueinander (bei n = 4), so dass die Nebenschneiden -12- entlang der Kontur eines imaginären zweiten n-Ecks -E2-(eines Quadrats bei n = 4) verlaufen. Mit anderen Worten bilden die Nebenschneiden -12- Tangenten an einen zweiten Kreis -K2-, der konzentrisch zu dem ersten Kreis -K1- ist. Der Radius des zweiten Kreises -K2- ist dabei kleiner als der Radius des ersten Kreises -K1-. Dabei liegt das Verhältnis zwischen dem Radius des ersten Kreises -K1- und dem Radius des zweiten Kreises -K2- zwischen 1,02 und 1,2. Mit anderen Worten ist die Kantenlänge des zweiten n-Ecks -E2- kleiner als die Kantenlänge des ersten n-Ecks -E1-.

Das imaginäre erste n-Eck -E1- ist gegenüber dem imaginären zweiten n-Eck -E2- bezüglich der Symmetrieachse -S- um einen Winkel -β- derart verkippt, dass die Hauptschneide -10- und die Nebenschneide -12- einer Teilschneidkante -9- jeweils einen Außenwinkel -α- (= 180°- -β-) miteinander bilden, der kleiner als 180° ist, so dass ein an den Übergangsabschnitt -11-anschließendes Ende der Nebenschneide -12- gegenüber einer Verbindungslinie, die zwei benachbarte Schneidecken -8- verbindet, in Richtung der Symmetrieachse -S- zurückversetzt angeordnet ist. Der Winkel -β- beträgt dabei zwischen 1° und 7°, bevorzugt zwischen 2° und 5°, am meisten bevorzugt 3°.

Durch diese Ausgestaltung ist zwischen einer Hauptschneide -10- einer Teilschneidkante -9- und einer Nebenschneide -12- einer (über eine Schneidecke -8-) benachbarten Teilschneidkante -9- ein spitzer Winkel gebildet (90° - β bei n = 4), so dass eine spitzwinklige Schneidecke -8- gebildet ist. Die Schneidecke -8- selbst weist bei der Ausführungsform einen konstanten Eckenradius auf.

Bei der ersten Ausführungsform sind die Radienverhältnisse der Kreise -K1- und -K2- derart gewählt, dass eine Verlängerung der Hauptschneide -10- die Schneidkante -5- dort schneiden würde, wo die Nebenschneide -12- in die angrenzende Schneidecke -8- übergeht. Es ist allerdings zu beachten, dass diese Ausgestaltung nicht zwingend ist.

Die umlaufende Seitenfläche -4- weist einen der Oberseite -2- zugewandten oberen Abschnitt -4a- und einen der Unterseite -3- zugewandten unteren Abschnitt -4b- auf. Die Seitenfläche -4- ist dabei derart ausgebildet, das der obere Abschnitt -4a- entlang der Teilschneidkanten -9- jeweils in einem konstanten Freiwinkel -ε1- gegenüber der Symmetrieachse -S- verläuft, d.h. die Hauptschneiden -10- und die Nebenschneiden -12- weisen denselben Freiwinkel -ε1- auf. Der Freiwinkel -ε1- kann z.B. ca. 8° betragen. Der untere Abschnitt -4b- weist ebenfalls entlang der Hauptschneiden -10- und Nebenschneiden -12- einen konstanten Winkel -ε2- gegenüber der Symmetrieachse -S- auf, der jedoch größer ist, als in dem oberen Abschnitt -4a-. Der Winkel -ε2- kann z.B. ca. 15° betragen.

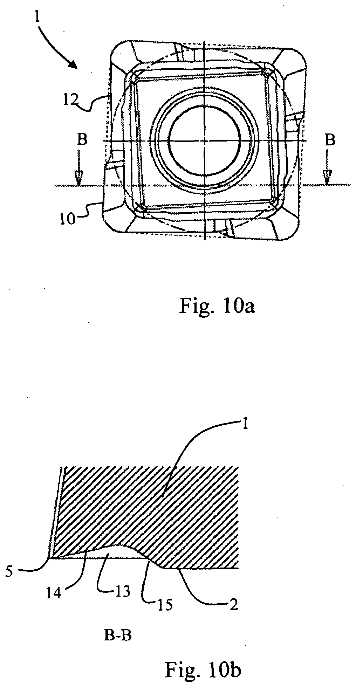

Die Oberseite -2- des Bohrer-Schneideinsatzes -1- ist mit einer spanleitenden Struktur -13- versehen, wie im Folgenden unter Bezug auf die Fig. 10a und 10b eingehender erläutert wird. Die spanleitende Struktur -13- wird durch eine von der Schneidkante -5- in Richtung der Unterseite -3- abfallende Spanfläche -14- und eine daran anschließende, zum Zentrum des Bohrer-Schneideinsatzes -1-ansteigende Fläche -15- gebildet, so dass die spanleitende Struktur -13- die Form einer vertieften Rille in der Oberseite -2- aufweist. Wie insbesondere in Fig. 1 und Fig. 10a zu sehen ist, nimmt die Breite der spanleitenden Struktur -13- entlang den jeweiligen Teilschneidkanten -9- von der Nebenschneide -12- zu der Hauptschneide -10- zu, so dass die spanleitende Struktur -13- im Bereich der Hauptschneide -10- eine größere Breite aufweist, als im Bereich der Nebenschneide -12-. Ferner ist die spanleitende Struktur -13- im Bereich der Hauptschneide -10- auch tiefer ausgebildet (gemessen von der Höhe der Schneidkante -5- in einer Richtung parallel zu der Symmetrieachse -S-), als im Bereich der Nebenschneide -12-. In dieser Weise wird beim Bohren eine besonders günstige Spanbildung erzielt, die insbesondere beim Anbohren, d.h. beim Eintritt in das zu bohrende Material zu einer langsamen Zunahme der wirkenden Schneidkräfte führt.

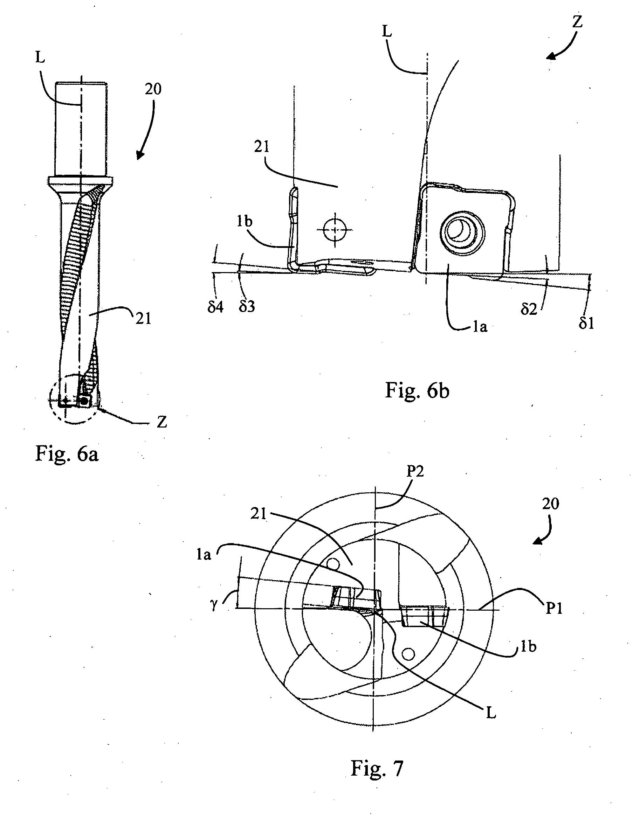

Im Folgenden wird ein Bohrwerkzeug -20- beschrieben, dass mit zwei der zuvor beschriebenen Bohrer-Schneideinsätze -1- versehen ist. In Fig. 6 ist ein Ausschnitt des Bohrwerkzeugs -20- im Bereich eines axialen Endes dargestellt, an dem die beiden Bohrer-Schneideinsätze -1- angeordnet sind.

Das Bohrwerkzeug -20- weist einen Grundkörper -21- auf, der zum Bohren um eine Längsachse -L- drehbar ist. Der Grundkörper -21- ist mit zwei Aufnahmeabschnitten zur Aufnahme jeweils eines Bohrer-Schneideinsatzes -1-versehen. Einer der beiden Aufnahmeabschnitte dient als innerer Aufnahmeabschnitt und der andere Aufnahmeabschnitt dient als äußerer Aufnahmeabschnitt. Die Aufnahmeabschnitte sind derart ausgebildet, dass die Bohrer-Schneideinsätze in diesen verliersicher und verdrehsicher in einer Ausrichtung aufnehmbar sind, die im Folgenden noch eingehender beschrieben wird. Die Aufnahmeabschnitte weisen insbesondere jeweils eine Gewindebohrung zur Aufnahme einer Schraube auf, die durch die Bohrung -6-in dem jeweiligen Bohrer-Schneideinsatz -1- geführt ist. Ferner können die Aufnahmeabschnitte jeweils eine oder mehrere Anlageflächen aufweisen, an den sich der jeweilige dort aufgenommene Bohrer-Schneideinsatz -1-formschlüssig abstützen kann. Der Grundkörper -21- kann ferner mit einer oder mehreren Spanleitnuten versehen sein, die im Folgenden nicht eingehender beschrieben werden. Derartige Gestaltungen sind allgemein bekannt und werden daher hier nicht ausführlicher beschrieben. Im Folgenden wird detaillierter beschrieben, in welcher Ausrichtung die Bohrer-Schneideinsätze -1-an dem Grundkörper -21- befestigt sind.

Fig. 7 zeigt eine Aufsicht auf das axiale Ende des Bohrwerkzeugs -20- entlang der Längsachse -L-. Ein erster Bohrer-Schneideinsatz -1- ist als ein innerer Schneideinsatz -1a- an dem Grundkörper -21- befestigt und ein zweiter, identischer Bohrer-Schneideinsatz -1- ist als ein äußerer Schneideinsatz -1 b-an dem Grundkörper -21- befestigt. Der innere Schneideinsatz -1a- und der äußere Schneideinsatz -1 b- sind in unterschiedlichem radialen Abstand von der Längsachse -L- und im Wesentlichen in einer ersten Ebene -P1- angeordnet, die die Längsachse -L- enthält. Eine zweite Ebene -P2-, die ebenfalls die Längsachse -L- enthält, erstreckt sich senkrecht zu der ersten Ebene -P1-. Der innere Schneideinsatz -1 a- ist derart angeordnet, dass er die zweite Ebene -P2-schneidet und die aktive Teilschneidkante -9-, die in axialer Richtung (bezüglich der Längsachse -L-) über den Grundkörper -21- hervorsteht, unter einem Winkel-γ- zu der ersten Ebene -P1- verläuft. Der Winkel -γ- kann z.B. ca. 5° betragen. Der innere Schneideinsatz -1a- ist dabei derart angeordnet, dass die aktive Teilschneidkante -9- die zweite Ebene -P2- in einem kleinen Abstand von der Längsachse -L- schneidet, so dass die aktive Teilschneidkante -9-bezüglich der Rotation um die Längsachse -L- im Betrieb leicht hinter der ersten Ebene -P1- angeordnet ist. Der innere Schneideinsatz -1a- ist somit "unter Mitte" angeordnet.

Der äußere Schneideinsatz -1 b- ist derart angeordnet, dass dessen aktive Teilschneidkante -9-, die in axialer Richtung über den Grundkörper -21-hervorsteht, zumindest im Wesentlichen parallel zu der ersten Ebene -P1-verläuft und bezüglich der Rotation um die Längsachse -L- im Betrieb des Bohrwerkzeugs -20- etwas vor der ersten Ebene -P1- angeordnet ist.

Der innere Schneideinsatz -1 a- und der äußere Schneideinsatz -1 b- sind somit bezüglich einer Rotation um die Längsachse -L- beim Betrieb des Bohrwerkzeugs -20- in unterschiedlicher radialer Position angeordnet und um etwa eine halbe Umdrehung zueinander versetzt.

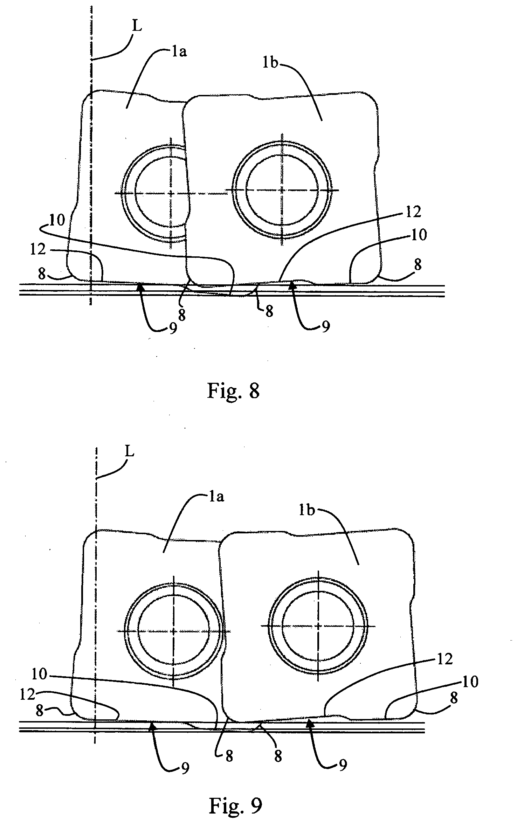

Im Folgenden wird unter Bezug auf die Fig. 8 und Fig. 9 die Ausrichtung der aktiven Teilschneidkanten -9- des inneren Schneideinsatzes -1a- und des äußeren Schneideinsatzes -1 b- in Bezug auf eine Ebene senkrecht zu der Längsachse -L- beschrieben. Sowohl in Fig. 8 als auch in Fig. 9 sind dabei nur die Schneideinsätze -1a- und -1b- dargestellt und der Grundkörper -21- des Bohrwerkzeugs -20- ist zur Verdeutlichung weggelassen. Ferner ist sowohl in Fig. 8 als auch in Fig. 9 der äußere Schneideinsatz -1b- gegenüber seiner realen Position um ca. eine halbe Umdrehung um die Längsachse -L- verdreht dargestellt, um die relative Ausrichtung der aktiven Teilschneidkante -9- des inneren Schneideinsatzes -1 a- und der aktiven Teilschneidkante -9- des äußeren Schneideinsatzes -1b- zueinander aufzuzeigen.

Fig. 8 ist eine Darstellung der Anordnung der Schneideinsätze -1 a- und -1 b- für den kleinsten mit den gegebenen Schneideinsätzen zu bohrenden Durchmesser, d.h. der Anordnung, bei der der äußere Schneideinsatz -1b- in radialer Richtung -R- am Weitesten innen angeordnet ist. Fig. 9 ist eine Darstellung der Anordnung der Schneideinsätze -1a- und -1b- für den größten mit den gegebenen Schneideinsätzen zu bohrenden Durchmesser, d.h. der Anordnung, bei der der äußere Schneideinsatz -1b- in radialer Richtung -R- am Weitesten außen angeordnet ist. Die unterschiedlichen zu bohrenden Durchmesser werden bei der beschriebenen Anordnung von zwei identischen Bohrer-Schneideinsätzen -1- durch eine Veränderung der radialen Position des äußeren Schneideinsatzes -1 b- bereitgestellt. Mit Anordnungen des äußeren Schneideinsatzes -1b- in radialen Positionen, die sich zwischen den in Fig. 8 und Fig. 9 dargestellten Extrempositionen befinden, lassen sich zu bohrende Durchmesser einstellen, die zwischen dem größten zu bohrenden Durchmesser und dem kleinsten zu bohrenden Durchmesser liegen.

Wie in den Fig. 8 und Fig. 9 deutlich erkennbar ist, überlappen sich die Bewegungsbahnen des inneren Schneideinsatzes -1a- und des äußeren Schneideinsatzes -1b- bei einer Rotation um die Längsachse -L- teilweise. In dieser Weise ist erreicht, dass bei der jeweiligen Ausrichtung der Schneideinsätze -1a- und -1b- inaktive Teilschneidkanten -9- und Schneidecken -8- derart geschützt angeordnet sind, dass diese nicht mit dem zu bohrenden Material in Eingriff gelangen und somit nicht abgenutzt werden. Diese Wirkung ist für sämtliche zu bohrende Durchmesser realisiert. Der innere Schneideinsatz -1 a- ist derart angeordnet, dass er in axialer Richtung weiter von dem Grundkörper -21- hervorsteht als der äußere Schneideinsatz -1 b-.

Zunächst wird anhand von Fig. 8 (bzw. Fig. 9) die Ausrichtung des inneren Schneideinsatzes -1a- beschrieben.

Wie in Fig. 8 zu sehen ist, ist die Hauptschneide -10- der aktiven Teilschneidkante -9- des inneren Schneideinsatzes -1a- derart zu der Längsachse -L- geneigt ausgerichtet, dass ihr in radialer Richtung -R- weiter von der Längsachse -L- entfernter Bereich (d.h. der an die Schneidecke -8-angrenzende Bereich bzw. radial äußerer Bereich) in axialer Richtung weiter hervorsteht, als ihr in radialer Richtung -R- näher an der Längsachse -L-angeordneter Bereich (d.h. ihr an den Übergangsabschnitt -11- angrenzender Bereich bzw. radial innerer Bereich). Die Hauptschneide -10- verläuft unter einem Winkel -δ1- relativ zu einer Ebene senkrecht zu der Längsachse -L-, wie in Fig. 6b dargestellt ist. Das bedeutet, dass der in radialer Richtung -R- weiter außen befindliche Bereich dieser Hauptschneide -10- beim Eintreten des Bohrwerkzeugs -20- in das zu bohrende Material früher mit dem zu bohrenden Material in Eingriff gelangt, als der in radialer Richtung weiter innen befindliche Bereich dieser Hauptschneide -10-. Aufgrund dieser Ausrichtung der Hauptschneide -10- des inneren Schneideinsatzes -1 a- bewirkt der innere Schneideinsatz -1a- beim Bohren eine kleine, nach außen wirkende resultierende Kraft auf den Grundkörper -21-.

Die Nebenschneide -12- der aktiven Teilschneidkante -9- des inneren Schneideinsatzes -1a- ist ebenfalls derart zu der Längsachse -L- geneigt ausgerichtet, dass ihr in radialer Richtung -R- weiter von der Längsachse -L-entfernter Bereich (d.h. der an den Übergangsabschnitt -11- angrenzende Bereich bzw. radial äußere Bereich) in axialer Richtung weiter hervorsteht, als ihr in radialer Richtung -R- weiter innen angeordneter Bereich (d.h. der an die andere Schneidecke -8- angrenzende Bereich bzw. radial innere Bereich). Die Nebenschneide -10- verläuft unter einem Winkel -δ2- relativ zu einer Ebene senkrecht zu der Längsachse -L-, wie in Fig. 6b dargestellt ist. In dieser Weise wird erreicht, dass die innen befindliche Schneidecke -8- nicht mit dem zu bohrenden Material in Eingriff gelangt und somit bei dieser Ausrichtung des inneren Schneideinsatzes -1a- nicht abgenutzt wird.

Im Folgenden wird die Ausrichtung der aktiven Teilschneidkante -9- des äußeren Schneideinsatzes -1 b- eingehender beschrieben.

Wie in Fig. 8 (und Fig. 9) zu sehen ist, ist die Hauptschneide -10- der aktiven Teilschneidkante -9- des äußeren Schneideinsatzes -1b- derart zu der Längsachse -L- ausgerichtet, dass ihr in radialer Richtung -R- näher an der Längsachse -L- angeordneter Bereich (d.h. der an den Übergangsabschnitt -11-angrenzende Bereich bzw. radial innere Bereich) in axialer Richtung weiter hervorsteht, als der in radialer Richtung -R- weiter von der Längsachse -L-entfernte Bereich (d.h. der an die Schneidecke -8- angrenzende Bereich bzw. radial äußere Bereich). Die Hauptschneide -10- verläuft unter einem Winkel -δ3-relativ zu einer Ebene senkrecht zu der Längsachse -L-, wie in Fig. 6b dargestellt ist. In dieser Weise ist erreicht, dass die Hauptschneide -10- des äußeren Schneideinsatzes -1b- beim Bohren eine leichte nach innen wirkende Kraft auf den Grundkörper -21- des Bohrwerkzeugs -20- ausübt. Diese Kraft ist somit der durch die Hauptschneide -10- des inneren Schneideinsatzes -1 a-bewirkten Kraft entgegengerichtet, was zu einer Stabilisierung des Bohrwerkzeugs -20- beim Bohren führt.

Die Nebenschneide -12- der aktiven Teilschneidkante -9- des äußeren Schneideinsatzes -1 b- ist derart bezüglich der Längsachse -L- geneigt ausgerichtet, dass der in radialer Richtung -R- näher an der Längsachse angeordnete Bereich (d.h. der an die Schneidecke -8- angrenzende Bereich bzw. radial innere Bereich) in axialer Richtung weiter hervorsteht, als der in radialer Richtung -R- weiter von der Längsachse -L- entfernte Bereich (d.h. der an den Übergangsabschnitt -11- angrenzende Bereich bzw. radial äußere Bereich).

Durch die beschriebene Ausrichtung der Hauptschneiden -10- und der Nebenschneiden -12- des inneren Schneideinsatzes -1a- und des äußeren Schneideinsatzes -1b- treten beim Eindringen in das zu bohrende Material nur relativ geringe Kräfte auf und es erfolgt sehr schnell eine Stabilisierung des Bohrprozesses. Durch die Ausrichtung der einzelnen Abschnitte der aktiven Teilschneidkanten -9- zueinander werden beim Bohren stirnseitig Rillen in dem zu bohrenden Material erzeugt, die eine Führung und Stabilisierung bewirken, die insbesondere beim Bohren von tiefen Löchern eine hohe Bearbeitungsgenauigkeit ermöglichen.

Ferner ist mit der beschriebenen Ausrichtung erzielt, dass die radial außen befindliche Teilschneidkante -9- des äußeren Schneideinsatzes -1 b- nicht mit der Seitenwand des gebohrten Lochs in Eingriff gelangt, sondern zu dieser einen Freiraum ausbildet. In dieser Weise ist sichergestellt, dass diese inaktive Teilschneidkante -9- bei der gegebenen Ausrichtung des äußeren Schneideinsatzes -1 b- nicht abgenutzt wird.

### ZWEITE AUSFÜHRUNGSFORM

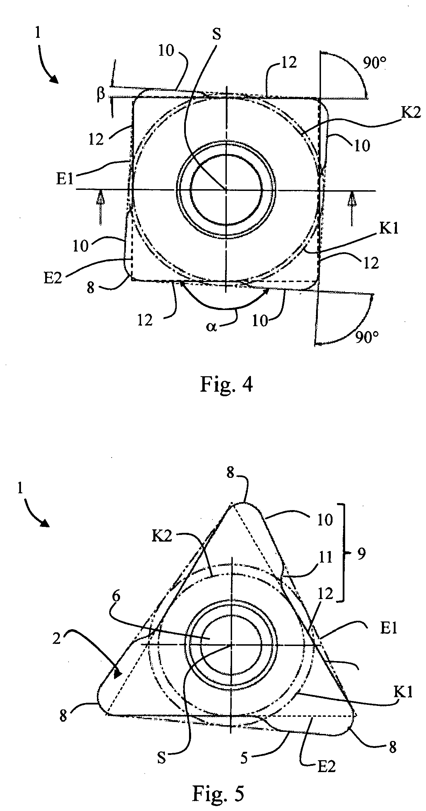

Im Folgenden wird unter Bezugnahme auf Fig. 5 eine zweite Ausführungsform des Bohrer-Schneideinsatzes -1- beschrieben.

Der Bohrer-Schneideinsatz -1- gemäß der zweiten Ausführungsform unterscheidet sich von der zuvor beschriebenen ersten Ausführungsform darin, dass er anstelle der zuvor beschriebenen, im Wesentlichen quadratischen Grundform eine im Wesentlichen dreieckige Grundform aufweist. Die zweite Ausführungsform unterscheidet sich von der ersten Ausführungsform nur in der unterschiedlichen Ausgestaltung der Form bei einer Betrachtung auf die Oberseite -2-, so dass im Folgenden nur die Unterschiede anhand der Aufsicht auf die Oberseite -2- beschrieben werden. Ferner werden in Bezug auf die zweite Ausführungsform dieselben Bezugszeichen für die entsprechenden Bereiche verwendet.

Der Bohrer-Schneideinsatz -1- gemäß der zweiten Ausführungsform weist eine Oberseite -2-, eine Unterseite -3- und eine umlaufende Seitenfläche -4-, die die Oberseite -2- und die Unterseite -3- miteinander verbindet, auf. An dem Übergang zwischen der Seitenfläche -4- und der Oberseite -2- ist eine Schneidkante -5- gebildet, die auch bei der zweiten Ausführungsform entlang des gesamten Randes der Oberseite -2- umlaufend ausgebildet ist. Der Bohrer-Schneideinsatz -1- weist eine Symmetrieachse -S- auf, die in Fig. 5 senkrecht zur Darstellungsebene verläuft. Der Bohrer-Schneideinsatz -1- gemäß der zweiten Ausführungsform weist eine dreizählige Rotationssymmetrie (n = 3) um die Symmetrieachse -S- auf, d.h. der Bohrer-Schneideinsatz -1- weist bei Rotation um 120° um die Symmetrieachse -S- dieselbe Form auf. Es ist eine Bohrung -6- vorgesehen, die konzentrisch zu der Symmetrieachse -S- verläuft und den Bohrer-Schneideinsatz -1- von der Oberseite -2- zu der Unterseite -3-durchdringt. Die Bohrung -6- ist von einer umlaufenden Fläche -7- umgeben, die sich in einer Ebene senkrecht zu der Symmetrieachse -S- erstreckt.

Der Bohrer-Schneideinsatz -1- weist in Aufsicht auf die Oberfläche -2- eine im Wesentlichen dreieckige Grundform auf, die in einigen Bereichen abgewandelt ist, wie im Folgenden noch eingehender beschrieben wird. Der Bohrer-Schneideinsatz -1- weist drei Schneidecken -8- auf. Zwischen jeweils zwei benachbarten Schneidecken -8- erstrecken sich Teilschneidkanten -9-, die - ebenso wie die Schneidecken -8- - Abschnitte der Schneidkante -5-bilden. Die Teilschneidkanten -9- sind jeweils identisch ausgebildet und weisen eine Hauptschneide -10-, einen Übergangsabschnitt -11- und eine Nebenschneide -12- auf. Die Hauptschneide -10- schließt sich an die eine, die jeweilige Teilschneidkante -9- begrenzende Schneidecke -8- an und die Nebenschneide -12- schließt sich an die andere, die jeweilige Teilschneidkante -9- begrenzende Schneidecke -8- an. Die Hauptschneide -10- und die Nebenschneide -12- gehen über den Übergangsabschnitt -11-ineinander über, d.h. der Übergangsabschnitt -11- ist ein separater Abschnitt der Teilschneidkante -9- der die Hauptschneide -10- und die Nebenschneide -12- miteinander verbindet. In Aufsicht auf die Oberseite -2-, die sich im Wesentlichen senkrecht zu der Symmetrieachse -S- erstreckt, verläuft die Hauptschneide -10- gerade. Auch die Nebenschneide -12- verläuft in Aufsicht auf die Oberseite -2- gerade. Der Übergangsabschnitt -11- weist angrenzend an die Hauptschneide -10- einen konvexen Abschnitt und angrenzend an die Nebenschneide -12- einen konkaven Abschnitt auf.

Wie bei der ersten Ausführungsform, verläuft die Schneidkante -5- über ihren gesamten Verlauf in einer Ebene, die sich senkrecht zu der Symmetrieachse -S- erstreckt, d.h. die Schneidkante -5- verläuft im Bereich der Schneidecken -8-, im Bereich der Hauptschneiden -10-, im Bereich der Übergangsabschnitte -11- und im Bereich der Nebenschneiden -12- in derselben Ebene senkrecht zu der Symmetrieachse -S-.

Die Hauptschneiden -10- von jeweils zwei benachbarten Teilschneidkanten -9-verlaufen in einem Winkel von 60° zueinander (da n = 3), so dass die Hauptschneiden -10- entlang der Kontur eines imaginären ersten Dreiecks (n-Eck mit n = 3) verlaufen. Mit anderen Worten bilden die Hauptschneiden -10-in ihrer Verlängerung Tangenten an einen ersten Kreis um die Symmetrieachse -S- des Bohrer-Schneideinsatzes -1-.

Die Nebenschneiden -12- von jeweils zwei benachbarten Teilschneidkanten -9-verlaufen ebenfalls in einem Winkel von 60° zueinander (da n = 3), so dass die Nebenschneiden -12- entlang der Kontur eines imaginären zweiten Dreiecks (n-Eck mit n = 3) verlaufen. Mit anderen Worten bilden die Nebenschneiden -12- Tangenten an einen zweiten Kreis, der konzentrisch zu dem ersten Kreis ist. Der Radius des zweiten Kreises ist (wie bei der ersten Ausführungsform) dabei kleiner als der Radius des ersten Kreises. Mit anderen Worten ist die Kantenlänge des zweiten Dreiecks kleiner als die Kantenlänge des ersten Dreiecks.

Das imaginäre erste Dreieck ist gegenüber dem imaginären zweiten Dreieck bezüglich der Symmetrieachse -S- um einen Winkel -β- derart verkippt, dass die Hauptschneide -10- und die Nebenschneide -12- einer Teilschneidkante -9-jeweils einen Außenwinkel -α- (= 180°- -β-) miteinander bilden, der kleiner als 180° ist, so dass ein an den Übergangsabschnitt -11- anschließendes Ende der Nebenschneide -12- gegenüber einer Verbindungslinie, die zwei benachbarte Schneidecken -8- verbindet, in Richtung der Symmetrieachse -S-zurückversetzt angeordnet ist. Der Winkel -β- beträgt dabei zwischen 1° und 7°, bevorzugt zwischen 2° und 5°, am meisten bevorzugt 3°. Die Schneidecke -8-selbst weist auch bei der zweiten Ausführungsform einen konstanten Eckenradius auf.

Auch bei der zweiten Ausführungsform sind die Radienverhältnisse der Kreise derart gewählt, dass eine Verlängerung der Hauptschneide -10- die Schneidkante -5- dort schneiden würde, wo die Nebenschneide -12- in die angrenzende Schneidecke -8- übergeht. Wie bereits bezüglich der ersten Ausführungsform ausgeführt wurde, ist diese Realisierung auch bei der zweiten Ausführungsform nicht zwingend.

Die Oberseite -2- des Bohrer-Schneideinsatzes -1- kann auch bei der zweiten Ausführungsform in an sich bekannter Weise mit geeigneten spanleitenden Strukturen versehen sein.

Zwei identische Bohrer-Schneideinsätze -1- gemäß der zweiten Ausführungsform können als innerer Schneideinsatz -1 a- und äußerer Schneideinsatz -1b- an einem Bohrwerkzeug -20- derart angeordnet werden, dass jeweils eine Teilschneidkante -9- eine aktive Teilschneidkante -9- bildet, die in axialer Richtung über den Grundkörper -21- des Bohrwerkzeugs -20-hervorsteht. Die aktiven Teilschneidkanten -9- des inneren Schneideinsatzes -1a- und des äußeren Schneideinsatzes -1b- werden dabei gemäß der zweiten Ausführungsform derart angeordnet, dass sie so verlaufen, wie es oberhalb in Bezug auf die erste Ausführungsform beschrieben wurde, d.h. mit derselben Ausrichtung in Bezug auf die Längsachse -L-.

## Patentansprüche

1. Schneideinsatz (1) mit:
einer Oberseite (2),
einer Unterseite (3),
einer umlaufenden Seitenfläche (4), die die Oberseite (2) und die Unterseite (3) miteinander verbindet, und
einer an dem Übergang zwischen der Seitenfläche (4) und der Oberseite (2) ausgebildeten Schneidkante (5),
wobei die Schneidkante (5) derart ausgebildet ist, dass n identische Schneidecken (8) und n identische Teilschneidkanten (9), die sich zwischen jeweils zwei Schneidecken (8) erstrecken, ausgebildet sind, mit n ∈ {3, 4},
wobei jede der n Teilschneidkanten (9) aufweist:
angrenzend an eine erste Schneidecke (8) eine in Aufsicht auf die Oberseite (2) gerade Hauptschneide (10),
angrenzend an die andere Schneidecke (8) eine in Aufsicht auf die Oberseite (2) gerade Nebenschneide (12), und
einen Übergangsabschnitt (11), über den die Hauptschneide (10) und die Nebenschneide (12) ineinander übergehen und der angrenzend an die Hauptschneide (10) einen konvexen Abschnitt und angrenzend an die Nebenschneide (12) einen konkaven Abschnitt aufweist,
wobei die Hauptschneide (10) und die Nebenschneide (12) in Aufsicht auf die Oberseite (2) außenseitig einen Winkel α < 180° miteinander einschließen,
**dadurch gekennzeichnet, dass** der Schneideinsatz (1) ein Bohrer-Schneideinsatz (1) ist, und dass die Oberseite (2) mit einer spanleitenden Struktur (13) versehen ist, die durch eine von der Schneidkante (5) in Richtung der Unterseite (3) abfallende Spanfläche (14) und eine daran anschließende, zu einem Zentrum des Bohrer-Schneideinsatzes (1) ansteigende Fläche (15) gebildet ist, sodass die spanleitende Struktur (13) die Form einer vertieften Rille in der Oberseite (2) aufweist, und deren Breite entlang einer Teilschneidkante (9) von der Nebenschneide (12) zu der Hauptschneide (10) zunimmt.

2. Bohrer-Schneideinsatz nach Anspruch 1, **dadurch gekennzeichnet, dass** die Hauptschneide (10) einer Teilschneidkante (9) und die Nebenschneide (12) einer benachbarten Teilschneidkante (9) einen spitzen Winkel miteinander einschließen, so dass eine spitzwinklige Schneidecke (8) gebildet ist.

3. Bohrer-Schneideinsatz nach einem der vorangehenden Ansprüche, **dadurch gekennzeichnet, dass** die n Hauptschneiden (10) entlang der Kontur eines imaginären ersten n-Ecks (E1) verlaufen und die n Nebenschneiden (12) entlang der Kontur eines imaginären zweiten n-Ecks (E2) verlaufen, das eine kleinere Kantenlänge als das imaginäre erste n-Eck (E1) aufweist.

4. Bohrer-Schneideinsatz nach einem der vorangehenden Ansprüche, **gekennzeichnet durch** eine Symmetrieachse (S), um die n-zählige Rotationssymmetrie gegeben ist.

5. Bohrer-Schneideinsatz nach Anspruch 4, **gekennzeichnet durch** eine Bohrung (6), die die Oberseite (2) und die Unterseite (3) miteinander verbindet und die konzentrisch zu der Symmetrieachse (S) verläuft.

6. Bohrer-Schneideinsatz nach Anspruch 4 oder 5, **dadurch gekennzeichnet, dass** die Schneidkante (5) in einer Ebene verläuft, die sich senkrecht zu der Symmetrieachse (S) erstreckt.

7. Bohrer-Schneideinsatz nach einem der vorangehenden Ansprüche, **dadurch gekennzeichnet, dass** die umlaufende Seitenfläche (4) derart ausgestaltet ist, dass entlang der gesamten Schneidkante (5) ein positiver Freiwinkel gebildet ist.

8. Bohrer-Schneideinsatz nach einem der vorangehenden Ansprüche, **dadurch gekennzeichnet, dass** die Länge der Hauptschneide (10) zwischen 20 % und 80 % der Länge der Nebenschneide (12) beträgt.

9. Bohrer-Schneideinsatz nach einem der vorangehenden Ansprüche, **gekennzeichnet durch** n = 4.

10. Bohrwerkzeug (20) mit:
einem Grundkörper (21), der um eine Längsachse (L) drehbar ist, und zumindest einem inneren Schneideinsatz (1a) und einem identisch zu dem inneren Schneideinsatz (1a) ausgebildeten, in radialer Richtung (R) weiter außen angeordneten äußeren Schneideinsatz (1b),
wobei der innere Schneideinsatz (1a) und der äußere Schneideinsatz (1b) jeweils durch einen Bohrer-Schneideinsatz (1) nach einem der vorangehenden Ansprüche gebildet sind.

11. Bohrwerkzeug nach Anspruch 10, **dadurch gekennzeichnet, dass** der innere Schneideinsatz (1a) mit einer aktiven Teilschneidkante (9) in axialer Richtung über den Grundkörper (21) hervorsteht und der äußere Schneideinsatz (1b) mit einer aktiven Teilschneidkante (9) in axialer Richtung über den Grundkörper (21) hervorsteht,
wobei bei der aktiven Teilschneidkante (9) des inneren Schneideinsatzes (1a) die Nebenschneide (12) näher zu der Längsachse (L) angeordnet ist, als die in axialer Richtung vorgelagerte Hauptschneide (10), und bei der aktiven Teilschneidkante (9) des äußeren Schneideinsatzes (1b) die Nebenschneide (12) näher zu der Längsachse (L) angeordnet ist, als die Hauptschneide (10).

12. Bohrwerkzeug nach Anspruch 10 oder 11, **dadurch gekennzeichnet, dass** die Hauptschneide (10) der aktiven Teilschneidkante (9) des inneren Schneideinsatzes (1a) derart ausgerichtet ist, dass ihr in radialer Richtung (R) weiter von der Längsachse (L) entfernter Bereich in axialer Richtung weiter hervorsteht, als ihr in radialer Richtung (R) näher an der Längsachse (L) angeordneter Bereich, und
die Hauptschneide (10) der aktiven Teilschneidkante (9) des äußeren Schneideinsatzes (1b) derart ausgerichtet ist, dass ihr in radialer Richtung (R) näher an der Längsachse (L) angeordneter Bereich in axialer Richtung weiter hervorsteht, als ihr in radialer Richtung (R) weiter von der Längsachse (L) entfernter Bereich.

13. Bohrwerkzeug mit:
einem Grundkörper (21), der um eine Längsachse (L) drehbar ist, und zumindest einem auswechselbaren inneren Schneideinsatz (1a) und
einem in radialer Richtung (R) weiter außen angeordneten auswechselbaren äußeren Schneideinsatz (1b), wobei:
der innere Schneideinsatz (1a) und der äußere Schneideinsatz (1b) identisch ausgebildet sind und jeweils zumindest eine in axialer Richtung über den Grundkörper (21) hervorstehende, identisch ausgebildete Teilschneidkante (9), die sich zwischen zwei Schneidecken (8) erstreckt, aufweisen,
wobei die Teilschneidkante (9) aufweist:
angrenzend an eine erste Schneidecke (8) eine gerade Hauptschneide (10),
angrenzend an die andere Schneidecke (8) eine gerade Nebenschneide (12), und
einen Übergangsabschnitt (11), über den die Hauptschneide (10) und die Nebenschneide (12) ineinander übergehen und der angrenzend an die Hauptschneide (10) einen konvexen Abschnitt und angrenzend an die Nebenschneide (12) einen konkaven Abschnitt aufweist,
wobei sowohl bei dem inneren Schneideinsatz (1a) als auch bei dem äußeren Schneideinsatz (1b) die Hauptschneide (10) in radialer Richtung (R) weiter von der Längsachse (L) entfernt angeordnet ist als die Nebenschneide (12),
der innere Schneideinsatz (1a) derart angeordnet ist, dass die Hauptschneide (10) der Nebenschneide (12) axial vorgelagert ist, und
der äußere Schneideinsatz (1b) derart angeordnet ist, dass die Hauptschneide (10) derart ausgerichtet ist, dass ihr in radialer Richtung (R) näher an der Längsachse (L) angeordneter Bereich in axialer Richtung weiter hervorsteht, als ihr in radialer Richtung (R) weiter von der Längsachse (L) entfernter Bereich,
**dadurch gekennzeichnet, dass** der innere Schneideinsatz (1a) derart angeordnet ist, dass die Hauptschneide (10) derart ausgerichtet ist, dass ihr in radialer Richtung (R) weiter von der Längsachse (L) entfernter Bereich in axialer Richtung weiter hervorsteht, als ihr in radialer Richtung (R) näher an der Längsachse (L) angeordneter Bereich.

14. Bohrwerkzeug nach einem der Ansprüche 10 bis 13, **dadurch gekennzeichnet, dass** die Nebenschneide (12) der aktiven Teilschneidkante (9) des äußeren Schneideinsatzes (1b) derart angeordnet ist, dass ihr in radialer Richtung (R) näher an der Längsachse (L) angeordneter Bereich in axialer Richtung weiter hervorsteht, als ihr in radialer Richtung (R) weiter von der Längsachse (L) entfernter Bereich.

## Claims

1. A cutting insert (1) having:
a top surface (2),
a bottom surface (3),
a circumferential side face (4) which connects the top surface (2) and the bottom surface (3) together, and
a cutting edge (5) which is realized at the transition between the side face (4) and the top surface (2),
wherein the cutting edge (5) is realized in such a manner that n identical cutting corners (8) and n identical part cutting edges (9), which in each case extend between two cutting corners (8), are realized,
where n ∈ {3, 4},
wherein each of the n part cutting edges (9) has:
adjoining a first cutting corner (8), a main cutting edge (10) which is straight in a top view onto the top surface (2),
adjoining the other cutting corner (8), a secondary cutting edge (12) which is straight in a top view onto the top surface (2), and
a transition portion (11), by means of which the main cutting edge (10) and the secondary cutting edge (12) merge into one another and which has a convex portion adjoining the main cutting edge (10) and a concave portion adjoining the secondary cutting edge (12),
wherein, in a top view onto the top surface (2), the main cutting edge (10) and the secondary cutting edge (12) enclose an angle α < 180° with one another on the outside,
**characterized in that** the cutting insert (1) is a drill cutting insert (1) and
that the top surface (2) is provided with a chip-conducting structure (13) formed by a rake face (14) which declines from the cutting edge (5) in the direction of the bottom surface (3) and a face (15) which connects thereto and inclines toward the center of the drill cutting insert (1) such that the chip-conducting structure (13) is in the form of a recessed groove in the top surface (2), the width of which increases along a part cutting edge (9) from the secondary cutting edge (12) to the main cutting edge (10).

2. The drill cutting insert as claimed in claim 1, **characterized in that** the main cutting edge (10) of a part cutting edge (9) and the secondary cutting edge (12) of an adjacent part cutting edge (9) enclose an acute angle with one another such that an acute cutting corner (8) is formed.

3. The drill cutting insert as claimed in one of the preceding claims, **characterized in that** the n main cutting edges (10) extend along the contour of an imaginary first n-corner (E1) and the n secondary cutting edges (12) extend along the contour of an imaginary second n-corner (E2) which has a smaller edge length than the imaginary first n-corner (E1).

4. The drill cutting insert as claimed in one of the preceding claims, **characterized by** an axis of symmetry (S), about which there is n-fold rotational symmetry.

5. The drill cutting insert as claimed in claim 4, **characterized by** a bore (6) which connects the top surface (2) and the bottom surface (3) together and which extends concentrically with respect to the axis of symmetry (S).

6. The drill cutting insert as claimed in claim 4 or 5, **characterized in that** the cutting edge (5) extends in a plane which extends vertically with respect to the axis of symmetry (S).

7. The drill cutting insert as claimed in one of the preceding claims, **characterized in that** the circumferential side face (4) is developed in such a manner that a positive clearance angle is formed along the entire cutting edge (5).

8. The drill cutting insert as claimed in one of the preceding claims, **characterized in that** the length of the main cutting edge (10) is between 20 % and 80 % of the length of the secondary cutting edge (12).

9. The drill cutting insert as claimed in one of the preceding claims, **characterized by** n = 4.

10. A drilling tool (20) having:
a basic body (21) which is rotatable about a longitudinal axis (L) and at least one inner cutting insert (1a) and one outer cutting insert (1b) which is realized identically to the inner cutting insert (1a) and is arranged further outside in the radial direction (R),
wherein the inner cutting insert (1a) and the outer cutting insert (1b) are formed in each case by a drill cutting insert (1) as claimed in one of the preceding claims.

11. The drilling tool as claimed in claim 10, **characterized in that** the inner cutting insert (1a) protrudes beyond the basic body (21) in the axial direction by way of an active part cutting edge (9) and the outer cutting insert (1b) protrudes beyond the basic body (21) in the axial direction by way of an active part cutting edge (9),
wherein in the case of the active part cutting edge (9) of the inner cutting insert (1a) the secondary cutting edge (12) is arranged closer to the longitudinal axis (L) than the main cutting edge (10) which is arranged in front in the axial direction, and in the case of the active part cutting edge (9) of the outer cutting insert (1b) the secondary cutting edge (12) is arranged closer to the longitudinal axis (L) than the main cutting edge (10).

12. The drilling tool as claimed in claim 10 or 11, **characterized in that** the main cutting edge (10) of the active part cutting edge (9) of the inner cutting insert (1a) is aligned in such a manner that its region which is distanced further from the longitudinal axis (L) in the radial direction (R) protrudes further in the axial direction than its region which is arranged closer to the longitudinal axis (L) in the radial direction (R), and
the main cutting edge (10) of the active part cutting edge (9) of the outer cutting insert (1b) is aligned in such a manner that its region which is arranged closer to the longitudinal axis (L) in the radial direction (R) protrudes further in the axial direction than its region which is distanced further from the longitudinal axis (L) in the radial direction (R).

13. A drilling tool having:
a basic body (21) which is rotatable about a longitudinal axis (L) and
at least one exchangeable inner cutting insert (1a) and one exchangeable outer cutting insert (1b) which is arranged further outside in the radial direction (R), wherein:
the inner cutting insert (1a) and the outer cutting insert (1b) are realized in an identical manner and in each case have at least one part cutting edge (9) which protrudes beyond the basic body (21) in the axial direction, is realized in an identical manner and extends between two cutting corners (8),
wherein the part cutting edge (9) has:
adjoining a first cutting corner (8), a straight main cutting edge (10), adjoining the other cutting corner (8), a straight secondary cutting edge (12), and
a transition portion (11), by means of which the main cutting edge (10) and the secondary cutting edge (12) merge into one another and which has a convex portion adjoining the main cutting edge (10) and a concave portion adjoining the secondary cutting edge (12),
wherein both in the case of the inner cutting insert (1a) and in the case of the outer cutting insert (1b) the main cutting edge (10) is arranged distanced further from the longitudinal axis (L) in the radial direction (R) than the secondary cutting edge (12),
the inner cutting insert (1a) is arranged in such a manner that the main cutting edge (10) is arranged axially in front of the secondary cutting edge (12) and
the outer cutting insert (1b) is arranged in such a manner that the main cutting edge (10) is aligned in such a manner that its region which is arranged closer to the longitudinal axis (L) in the radial direction (R) protrudes further in the axial direction than its region which is distanced further from the longitudinal axis (L) in the radial direction (R)
**characterized in that** the inner cutting insert (1a) is arranged such that the main cutting edge (10) is aligned in such a manner that its region which is distanced further from the longitudinal axis (L) in the radial direction (R) protrudes further in the axial direction than its region which is arranged closer to the longitudinal axis (L) in the radial direction (R).

14. The drilling tool as claimed in one of claims 10 to 13, **characterized in that** the secondary cutting edge (12) of the active part cutting edge (9) of the outer cutting insert (1b) is arranged in such a manner that its region which is arranged closer to the longitudinal axis (L) in the radial direction (R) protrudes further in the axial direction than its region which is distanced further from the longitudinal axis (L) in the radial direction (R).

## Revendications

1. Insert de coupe (1) doté :
d'une surface supérieure (2),
d'une surface inférieure (3),
d'une surface latérale périphérique (4) qui relie les surfaces supérieure (2) et inférieure (3) entre elles, ainsi que
d'une arête de coupe (5) réalisée au niveau de la transition entre la surface latérale périphérique (4) et la surface supérieure (2),
l'arête de coupe (5) étant configurée de façon à ce que n coins de coupe (8) identiques et n arêtes de coupe partielles (9) identiques s'étendant chacune entre deux coins de coupe (8), soient réalisés, avec n E {3, 4},
chacune desdites n arêtes de coupe partielles (9) présentant :
dans une position adjacente à un premier coin de coupe (8), une lame de coupe principale (10) qui est droite dans une vue en plan de la surface supérieure (2),
dans une position adjacente à l'autre coin de coupe (8), une lame de coupe secondaire (12) qui est droite dans une vue en plan de la surface supérieure (2),
ainsi qu'un secteur de transition (11) dans lequel la lame de coupe principale (10) et la lame de coupe secondaire (12) se confondent, ledit secteur de transition présentant une partie convexe adjacente à la lame de coupe principale (10) et une partie concave adjacente à la lame de coupe secondaire (12),
lesdites lames de coupe principale (10) et secondaire (12) formant entre elles, sur le côté extérieur dans une vue en plan de la surface supérieure (2), un angle α < 180°,
**caractérisé en ce que** l'insert de coupe (1) est un insert de coupe pour foret (1) et **en ce que** ladite surface supérieure (2) est dotée d'une structure de guidage des copeaux (13) qui est formée par une surface d'enlèvement de copeaux (14) descendant depuis l'arête de coupe (5) dans la direction de la surface inférieure (3) et par une surface (15) s'y raccordant, montant jusqu'à un centre de l'insert de coupe pour foret (1), de telle sorte que la structure de guidage des copeaux (13) présente la forme d'une rainure renfoncée dans la surface supérieure (2) et dont la largeur augmente le long d'une arête de coupe partielle (9) depuis la lame de coupe secondaire (12) vers la lame de coupe principale (10).

2. Insert de coupe pour foret selon la revendication 1, **caractérisé en ce que** la lame de coupe principale (10) d'une arête de coupe partielle (9) et la lame de coupe secondaire (12) d'une arête de coupe partielle (9) adjacente forment entre elles un angle aigu de sorte qu'il en résulte un coin de coupe (8) à angle aigu.

3. Insert de coupe pour foret selon l'une quelconque des revendications précédentes, **caractérisé en ce que** les n lames de coupe principales (10) s'étendent le long du contour d'un premier polygone à n côtés (E1) imaginaire et **en ce que** les n lames de coupe secondaires (12) s'étendent le long du contour d'un second polygone à n côtés (E2) imaginaire, ce dernier possédant une longueur d'arête inférieure à celle du premier polygone à n côtés (E1) imaginaire.

4. Insert de coupe pour foret selon l'une quelconque des revendications précédentes, **caractérisé par** un axe de symétrie (S) avec une symétrie de rotation d'ordre n.

5. Insert de coupe pour foret selon la revendication 4, **caractérisé par** un trou de forure (6) reliant la surface supérieure (2) et la surface inférieure (3) entre elles et s'étendant de façon concentrique par rapport à l'axe de symétrie (S).

6. Insert de coupe pour foret selon la revendication 4 ou 5, **caractérisé en ce que** l'arête de coupe (5) s'étend dans un plan perpendiculaire à l'axe de symétrie (S).

7. Insert de coupe pour foret selon l'une quelconque des revendications précédentes, **caractérisé en ce que** la surface latérale périphérique (4) est configurée de sorte qu'il en résulte un angle de dépouille positif le long de la totalité de l'arête de coupe (5).

8. Insert de coupe pour foret selon l'une quelconque des revendications précédentes, **caractérisé en ce que** la longueur de la lame de coupe principale (10) est comprise entre 20 % et 80 % de la longueur de la lame de coupe secondaire (12).

9. Insert de coupe pour foret selon l'une quelconque des revendications précédentes, **caractérisé en ce que** n = 4.

10. Foret (20) doté :
d'un corps de base (21) rotatif autour d'un axe longitudinal (L), et
d'au moins un insert de coupe intérieur (1a) et d'un insert de coupe extérieur (1b) identique à l'insert intérieur (1a) mais agencé plus à l'extérieur dans la direction radiale (R),
dans lequel l'insert de coupe intérieur (1a) et l'insert de coupe extérieur (1b) sont chacun constitués d'un insert de coupe pour foret (1) selon l'une quelconque des revendications précédentes.

11. Foret selon la revendication 10, **caractérisé en ce que** l'insert de coupe intérieur (1a), de par une arête de coupe partielle (9) active, fait saillie en direction axiale au-delà du corps de base (21) et **en ce que** l'insert de coupe extérieur (1b), de par une arête de coupe partielle (9) active, fait saillie en direction axiale au-delà du corps de base (21),
tandis que sur ladite arête de coupe partielle (9) active de l'insert de coupe intérieur (la), la lame de coupe secondaire (12) est agencée plus près de l'axe longitudinal (L) que la lame de coupe principale (10) disposée plus en avant dans la direction axiale et que sur l'arête de coupe partielle (9) active de l'insert de coupe extérieur (1b), la lame de coupe secondaire (12) est agencée plus près de l'axe longitudinal (L) que la lame de coupe principale (10).

12. Foret selon la revendication 10 ou 11, **caractérisé en ce que** la lame de coupe principale (10) de l'arête de coupe partielle (9) active de l'insert de coupe intérieur (1a) est orientée de façon telle que son secteur plus éloigné de l'axe longitudinal (L), dans la direction radiale (R), fasse davantage saillie dans la direction axiale que son secteur plus proche de l'axe longitudinal (L), dans la direction radiale (R), et
**en ce que** la lame de coupe principale (10) de l'arête de coupe partielle (9) active de l'insert de coupe extérieur (1b) est orientée de façon telle que son secteur plus proche de l'axe longitudinal (L), dans la direction radiale (R), fasse davantage saillie dans la direction axiale que son secteur plus éloigné de l'axe longitudinal (L), dans la direction radiale (R).

13. Foret doté :
d'un corps de base (21) rotatif autour d'un axe longitudinal (L), et
d'au moins un insert de coupe intérieur (1a) interchangeable et
d'un insert de coupe extérieur (1b) interchangeable agencé plus à l'extérieur dans la direction radiale (R),
l'insert de coupe intérieur (1a) et l'insert de coupe extérieur (1b) étant configurés à l'identique et comportant chacun au moins une arête de coupe partielle (9) identique qui s'étend entre deux coins de coupe (8) et fait saillie, dans la direction axiale, au-delà du corps de base (21),
l'arête de coupe partielle (9) comprenant :
en position adjacente à un premier coin de coupe (8), une lame de coupe principale (10) droite,
en position adjacente à l'autre coin de coupe (8) une lame de coupe secondaire (12) droite, ainsi qu'un secteur de transition (11) dans lequel la lame de coupe principale (10) et la lame de coupe secondaire (12) se confondent, ledit secteur de transition présentant une partie convexe adjacente à la lame de coupe principale (10) et une partie concave adjacente à la lame de coupe secondaire (12),
dans lequel, aussi bien sur l'insert de coupe intérieur (1a) que sur l'insert de coupe extérieur (1b), la lame de coupe principale (10) est agencée, dans la direction radiale (R), de manière à être plus éloignée de l'axe longitudinal (L) que la lame de coupe secondaire (12),
l'insert de coupe intérieur (1a) est agencé de telle sorte que la lame de coupe principale (10) soit disposée axialement en avant de la lame de coupe secondaire (12), et
l'insert de coupe extérieur (1b) est agencé de sorte telle que la lame de coupe principale (10) soit orientée de façon telle que son secteur plus proche de l'axe longitudinal (L), dans la direction radiale (R), fasse davantage saillie dans la direction axiale que son secteur plus éloigné de l'axe longitudinal (L), dans la direction radiale (R),
**caractérisé en ce que** l'insert de coupe intérieur (1a) est agencé de sorte telle que la lame de coupe principale (10) soit orientée de façon telle que son secteur plus éloigné de l'axe longitudinal (L) dans la direction radiale (R) fasse davantage saillie en direction axiale que son secteur plus proche de l'axe longitudinal (L) en direction radiale (R).

14. Foret selon l'une des revendications 10 à 13, **caractérisé en ce que** la lame de coupe secondaire (12) de l'arête de coupe partielle (9) active de l'insert de coupe extérieur (1b) est orientée de sorte que son secteur situé en direction radiale (R) plus proche de l'axe longitudinal (L) fasse davantage saillie en direction radiale que son secteur plus éloigné de l'axe longitudinal (L) en direction radiale (R).
